# EUROPEAN PATENT SPECIFICATION

(11) **EP 3 863 411 B1**
(45) Date of publication and mention of the grant of the patent: **13.08.2025**
(21) Application number: 19795685.7
(22) Date of filing: 25.09.2019
(51) Int. Cl.: A23C 9/137, A23C 9/142, A23C 19/076, A23C 19/09, A23C 21/02, A23C 21/06, A23C 9/123

(54) **A PROCESS FOR CREATING A CREAMY FOOD AND FOODS REALIZED BY SUCH PROCESS**
VERFAHREN ZUR HERSTELLUNG EINES CREMIGEN NAHRUNGSMITTELS UND MIT DIESEM VERFAHREN HERGESTELLTE NAHRUNGSMITTEL
PROCÉDÉ DE CRÉATION D'UN ALIMENT CRÉMEUX ET ALIMENTS OBTENUS PAR UN TEL PROCÉDÉ

(30) Priority: 08.10.2018 IT 201800009073
(43) Date of publication of application: 18.08.2021
(73) Proprietor: Parmital S.r.l., 43122 Parma (IT); Sala, Fermino, 43122 Parma (IT)
(72) Inventor: FERRARI, Davide, 46011 Acquanegra sul Chiese (MN) (IT)
(74) Representative: Botti & Ferrari S.p.A.
(86) International application number: PCT/IT2019/050212
(87) International publication number: WO 2020/075206

(56) References cited:
- DE-A1- 1 932 476
- DE-A1- 19 914 230
- US-A- 4 324 804
- US-A1- 2004 037 920
- US-B1- 6 183 804
- SHAMMET K M ET AL: "EFFECT OF ACIDIFICATION AND HEAT TREATMENT ON THE QUALITY OF WHITE SOFT CHEESE FROM ULTRAFILTERED WHOLE MILK RETENTATE", MILCHWISSENSCHAFT, VV GMBH VOLKSWIRTSCHAFTLICHER VERLAG. MUNCHEN, DE, vol. 47, no. 9, 1 January 1992 (1992-01-01), pages 553 - 557, XP000319982, ISSN: 0026-3788

## Description

The present invention relates to a process, which can also be carried out on an industrial scale and for variable production volumes, to make an edible substance (or briefly, food) having a creamy consistency and suitable spreadability characteristics; consequently, the present invention also has as its object a plurality of embodiments of the aforementioned process, which therefore encompass a range of creamy foods which will be described hereinafter.

### BACKGROUND OF THE INVENTION

It's known that there are many different types of so-called "spreadable creams" on the market, which are generally semi-solid food substances (or if necessary they can also be colloidal suspensions of different components/ingredients, suitably prepared and mixed together) and that can be both "sweet", such as chocolate creams variously flavored or "savory", i.e. creams flavored with dairy-derived products or even derived from various meat processing and edible parts of animals terrestrial or marine.

Focusing in particular on the so-called "cheese creams" (which depending on the current regulations on food can take different gender names, for example "creams based on/with Grana Padano, Parmigiano Reggiano, Taleggio, Pecorino" and so on), one can see how generally these types of food are in fact obtained by fusion of their main ingredient - that is to say the real cheese - which is then amalgamated with other components of the cream in order to have the appropriate semi-solid consistency and to consequently achieve the spreadability or the possibility of being portioned and handled with spoons and similar instruments.

In these foods (and in their respective production processes), the fusion of cheese is unfortunately a particularly invasive heat treatment, which interacts profoundly with the chemical/proteinic structure of the cheese itself, often causing irreversible alterations: it is not infrequent, in fact, the occurring, during this type of production phase, of changes that are sensitive to the original taste of "non-processed/melted" cheese, often combined with the loss of those volatile particles that also determine a worse olfactory perception (for the user/consumer of the finished product) and in general of the worst "sensory notes" in relation to unworked/melted cheese.

The loss of gustatory and/or olfactory characteristics is also accompanied, again due to the fusion of the cheese itself, also to a loss of nutritional values, which can also be a problem where the main nutrients of the cheese must be taken by particular consumers (it can be considered, for example, that people with particular difficulties in chewing or digestion, for which a food in a "creamy" state of aggregation is an important source of nutrition that allows them to take a significant amount of proteins and metabolic constituents - calcium and proteins, by way of example - without excessively straining the bodily apparatus subjected to these functional difficulties).

For example, it is known from some prior art references (US 4,324,804 A, US 6,183,804 B1, US 2004/037920 A1, DE 1932476 A1, DE 19914230 A1) a wide range of productive methods aimed at obtaining creamy foods: such methods however, rely on a very intrusive chemical modification of the "real cheese" to be added/used for defining the finished cream, and/or imply a finished product wherein the cheese itself must be used in very large percentages in order to have satisfactory tasting properties: this leads to an anti-economic production and also allows for a definition of a product wherein an excessive amount of fat substances and/or salt and/or sugars is present, giving substantial unhealthiness to the products themselves.

US 4,324,804 A regards soft bodied cream cheese which is readily spreadable at refrigeration temperatures; said cream cheese is prepared by blending a cultured cream cheese dressing mix having substantially unhomogenized milkfat with a firm bodied cream cheese curd having homogenized milkfat and packaging the blend at an elevated temperature.

US 6,183,804 discloses a two stage method for producing process cheese or process cheese-type products by the direct conversion of milk. This method does not require fermentation, enzymatic treatment, and/or intermediate steps of forming and separating curds and whey. In a first stage, a powdered milk protein concentrate is formed by ultrafiltering liquid milk and then the concentrated ultrafiltered milk is spray dried. In a second stage, a powdered milk protein concentrate is converted to process cheese or process cheese-type product.

US 2004/037920 A1 concerns a method for making cheese products having a living flora, characterized in that it comprises the following steps: a) providing a mixture comprising not less than 10% of at least a process cheese and not more than 90% of at least a natural cheese having a dry extract more than 45%; b) heat treatment at a temperature less than 90°C and mechanical treatment under low shearing, to obtain limited destructuring of the protein structure of the resulting cheese mass; c) shaping the cheese obtained at the preceding step; and d) packaging the resulting product.

DE1932476A1 concerns a mixed cheese which is produced by mixing pasteurised cream cheese with a sterilised mould-type cheese such as Blue Cheese, Roquefort or Gorgonzola. The mould-type cheese is sterilized. By this method the spreading of the mould is prevented, and a cheese milder than the mould-type is obtained.

DE 19914230 A1 concerns a sandwich spread which contains 50-95 wt.% fresh cheese and 5-30 wt.% feta cheese, the latter incorporated in grated form; a process for producing said spread comprising the following steps is disclosed: heating the fresh cheese with various additives, e.g. salt and citric acid; homogenizing; adding olive oil, the natural aroma and the flavoring and foaming; dosing the grated feta and herb mixture into the stream of hot fresh cheese; and mixing.

In view of the aforementioned drawbacks, the object of this invention is therefore to provide a process that avoids the drawbacks themselves, and that gives further functional advantages (at the level of the process itself) and of "structural/composition" of the finished products obtainable by this procedure.

### SUMMARY

The invention is set out in the appended set of claims.

In particular, referring to the cheese-based creams, an object of the present invention is to obtain a production process for this type of food which preserves the organoleptic and nutritional characteristics of the cheese in the finished product in a semi-solid aggregation state (or "creamy", otherwise stated).

Therefore, the consequential purpose of the invention is to obtain a finished product - based on cheese - which combines the greatest possible preservation of the organoleptic and nutritional characteristics of the unworked/melted cheese in addition to all the typical and advantageous characteristics of the creams, such as, by way of example, spreadability or packability in tubes and so on.

The present invention also aims at the conception of a production method of/cheese based creams that is perfectly compatible with the current production regulations, allowing high production rates to be reached together with bacteriological, toxicological and safety levels along with fully satisfactory quality.

According to the purposes related to the method and here above listed, the present invention also aims at the invention of different products that can be named as "cheese/cream based creams" that are superiorly characterized in organoleptic, nutritional and portionability/spreadability terms and assimilability both in physical and chemical terms (easy oral assumption, facilitated decomposition at the gastric level and more immediate assimilation at enteric level and so on).

An embodiment of the aforementioned process is therefore described and claimed hereinafter. Some types of product which can be obtained by applying the claimed process are described herein for illustrative purposes only.

The process, which is basic but not by way of limitation, is implemented to produce a so-called "cream based on/with cheese" by performing the steps as defined in the appended claims.

The purely mechanical processing of the mixable ingredient is able to determine a granulometry and/or a degree of fragmentation of the "granular mass" obtainable from the mixable ingredient, and this granulometry/degree of fermentation is such that it is possible to determine a homogeneous distribution of the ingredient that can be mixed in the cream base during the union of these same two components of the food.

In greater detail, the purely mechanical processing of the mixable ingredient is apt to maintain constant, in the granular/particulate mass, the organoleptic and/or nutritional characteristics with respect to the original organoleptic and/or nutritional characteristics of the mixable ingredient in a non-worked state. worked: for the sake of clarity, it must be understood that when referring to this non-worked state, it is a state for which the ingredient that can be mixed is completely and "permanently" defined by its autonomous processing (for example, in the case of cheese, a complete process for treating curdled and cured milk, or more generally everything that goes to make up a dairy-type process capable of producing a cheese) before being introduced and used in the process which is primarily the object of the invention herein treated.

The preparation phase of the mixable ingredient does not include, taking into account what has been said above, thermal fusion processes of the mixable ingredient and/or the cream base, nor does it include preliminary treatments that alter the chemical/protein characteristics: at most, as it will be seen below, the purely mechanical processing comprises a sub-step of trimming and/or a sub-step of grating the mixable ingredient.

For hard cheeses this processing step is necessary to guarantee a perfect mixing of the mixable ingredient with the cream base, but also to keep the sensorial perception characteristic in the consumption phase as unaltered as possible, maintaining a perception of grain in the case of using "grana"-type cheeses.

The process further comprises a step of pasteurizing the cream base and/or the mixable ingredient, which is implemented after joining the cream base with the mixable ingredient and which is performed at temperatures no higher than 85°C and in times not exceeding 30 seconds. This maximum combination of parameters (temperature and time) is to be considered mandatory of the procedure, since from laboratory tests carried out in the experimental phase it was found that the exceeding of these values involves a principle of variation and decay, perceptible and progressive, of the characteristics intrinsic organoleptic and sensory characteristics of the mixable ingredient, understood as such.

The mixable ingredient is derived from "hard cheese" (a cheese that has, in its un-worked state, a percentage of water by weight and/or by volume less than 40%).

Still in accordance with the invention, it is possible to choose one or more cheeses which have, in an un-worked state, a percentage of water by weight and/or in volume and/or a percentage of fat substances by weight and/or in volume and/or a maturation time such as to make it classifiable with at least one of the names of "parmigiano reggiano" and/or "grana padano" and/or "pecorino" and/or "provolone". These types of cheese have a percentage of fat substances by weight and/or in volume of between 27% and 30% and a percentage by weight and/or in volume of water not exceeding 40%.

Coming to the step of combining the mixable ingredient with the cream base, this comprises a sub-step of quantitatively determining a mixing proportion, by weight and/or in volume, of the mixable ingredient with respect to the cream base: this mixing proportion is between 25% and 30%.

Regarding the step of preparing the cream base, it should be noted that this comprises a sub-step of determining a lactic fermentation by means of mesophilic bacteria active on a predetermined quantity of a suitable mixture of milk and cream: this sub-step is suitable to obtain a so-called "acid clot" (a slang term well known to the technicians of the dairy production branch): during the procedure, this acid clot will be appropriately separated from the excess whey that can be traced in the different processes of the process itself.

The separation of the acid clot can conveniently be carried out by centrifugation in special separators for fat substances: in this implementation alternative, the entire procedure is simpler for management, use and realization at plant level, especially in terms of the investments necessary to achieve the plant and therefore normally guarantees a cream base yield of 60-65% of the initial mixture quantity (35-40% whey is extracted and then used as a by-product for zootechnical use which, being acid, has a low commercial value).

### DETAILED DESCRIPTION

More in detail, the sub-step of preparing the acid clot according to a first implementation form further comprises the following sub-steps:
- mixing in a given proportion a quantity of whole and/or low-fat fresh milk, a predetermined amount of surfacing cream and/or a predetermined quantity of concentrated cream, so as to obtain a base mixture having between 15% and 16% by weight and/or y mass and a protein content of between 2.8% and 3.2% by weight and/or by mass;
- storing the base mixture in a refrigerated tank (at a temperature for example equal to 4°C for a maximum time of 24 hours): as a further possibility during this storage, the refrigerated tank can be equipped with a timed stirrer;
- pasteurizing the base mixture at a temperature of 85°C for a time between 15 sec and 30 sec;
- homogenizing the base mixture (typically following pasteurization) at 170 bar and 60°C;
- extracting the base mixture (preferably after homogenization) at a temperature controlled "incubation" and between 23°C and 25°C
- adding to the base mixture (for example following the extraction sub-step) a predetermined quantity of mesophilic bacteria which can be freeze-dried at 2% and can increasingly comprise streptococcus lactis and/or cremoris and/or diacetylactis (this addition step can conveniently be performed in a temperature controlled ripener equipped with a pH sensor);
- letting the base mixture ferment for a period of time ranging from 12 hours to 18 hours, so as to obtain/define a predetermined quantity of acid clot of the base mixture (or in other words, the "acid clot" of which one is already previously mentioned);
- Adding to the acid clot a sodium chloride base mixture (conveniently, in a relative quantity equal to 0.7% of the mass and/or volume of this same acid clot of the base mixture (note also that in the scope of the invention the NaCl salt can also be added during the phase of joining the cream base with the mixable ingredient);
- measuring a pH value of the acid clot of the base mixture (which can advantageously be between 4.60 and 4.70);
- breaking the acid clot of the base mixture (for example after measuring the pH and using a stirring shovel and/or a scraping shovel to break the clot), taking care that this breakage avoids the so-called yielding of the acidic clot of the base mixture and/or so as to avoid loss of fat substances from the acidic clot of the base mixture;
- transferring the acid clot of the base mixture (typically following breaking) through a heat exchanger, in order to determine an acid clot temperature of the base mixture between 60°C and 65°C; and
- extracting (for example by means of a centrifugal separator) a predetermined quantity of whey from the acid clot of the base mixture: this quantity of whey can be between 35% and 40% by mass and/or in volume.

The sequence of sub-steps just described defines in practice a "cream base" having a dry matter content between 35% and 40% and/or a fat substances content ranging between 28% and 30% by mass and/or in volume compared to the base mixture.

According to another embodiment of the method, a sub-step of ultrafiltrating the acid coagulation of the base mixture is provided: in this embodiment the ultrafiltration is performed after a sub-step of preliminary concentration of a predetermined quantity of milk, which in turn is also usable at least in the step of preparing the cream base.

Operationally, it should be noted that this second implementation alternative requires greater investments for the construction of the relative plant, in addition to a somewhat more complex and articulated technology with greater processing steps than the first implementation variant, and which envisages the use of skimmed milk and not whole milk as previously described (milk cream is added to this skimmed milk, which occurs in both implementation alternatives).

In addition, the second implementation alternative, based on ultrafiltration, involves specific and thorough wash cycles of ultrafiltration tubes but guarantees higher processing yields, with a greater recovery of whey-proteins in the material of milky origin that is used in the overall process.

Another relevant aspect of the second implementation variant is the fact that through the ultrafiltration of milk in addition to the so-called "retentate" (i.e. concentrated milk), a "permeate" (i.e. the aqueous phase extracted) which has a content of 3-5% lactose is obtained: therefore the commercial value of the permeate is very different (and greater) than the acid whey obtained with the first implementation variant described above.

Going into the details of this second variant, it should be noted that it consists of these sub-steps:
- pasteurizing the base mixture at a temperature of 85°C for a period of time between 15 sec and 30 sec;
- bringing a temperature of the base mixture, for example pasteurization and through a heat exchanger, between 23°C and 25°C;
- transferring the base mixture to a ripener;
- adding lyophilized mesophilic bacteria/milk enzymes to the base mixture (for example comprising streptococcus lactis and/or cremoris and/or diacetylactis) in order to determine a pH value of the base mixture equal to 5.7 and defining a predetermined quantity of preacidified low-fat (skimmed) milk;
- ultrafiltering the pre-acidified low-fat milk, typically following a heating of the pre-acidified low-fat milk at a temperature of 50o C, so as to obtain a so-called "retentate" having a dry matter content between 17% and 18% by mass and/or in volume;
- cooling the retentate at a temperature between 23°C and 25°C;
- loading the retentate, typically following its cooling, in a fermentation ripener; - adding to the retentate (typically following its introduction into the ripener) a predetermined quantity of lyophilized mesophilic bacteria/lactic acid bacteria, which as previously seen may comprise streptococcus lactis and/or cremoris and/or diacetylactis and which may preferably be equal to 1% by mass and/or in volume of the retentate;
- adding, for example following the addition of the mesophilic lactic acid bacteria/lactic acid bacteria, a predetermined quantity of concentrated cream (which in turn can be conveniently previously pasteurized at 85°C; and/or homogenized at 170 bar and at 60°C and/or placed in a ripener at a temperature between 23°C and 25°C) so as to determine a resulting quantity of fat substances between 28% and 30% by mass and/or in volume and a content in dry matter resulting between 35% and 40% by mass and/or in volume (by way of example: to obtain these parameters, it is necessary to mix a part of pre-acidified low-fat milk with 17% of dry substance with a part and a half - in a ratio therefore equal to 1 : 1.5 of 45% concentrated cream in fat substances and 48-50% of dry substance);
- adding sodium chloride in an amount preferably equal to 0.7% by mass and/or in volume (also in this case the addition of the NaCl salt can be made during the union between the cream base and the mixable ingredient);
- determining an acid clot of the base mixture; and
- breaking the acid clot of the base mixture (for example using a stirring blade which also acts as a scraping and/or breaking blade).

As far as possible further processing of the cream base is concerned, it is possible within the scope of the invention to heat the cream base itself to a temperature between 60°C and 65°C, for example before the step of mixing the cream base with the mixable ingredient (e.g. via a heat exchanger).

Returning finally to the step of mixing the cream base with the mixable ingredient, the following sub-steps can also be identified in the invention:
- reducing the mixable ingredient in portions suitable for ensuring the homogeneous distribution (already mentioned above) of the same mixable ingredient to be poured in the cream base: this sub-step conveniently provides one or more sub-steps consisting in mechanically separating and/or breaking and/or cutting and/or peeling and/or grating the mixing ingredient itself until a predetermined granulometry is obtained (coherently with the purposes of the invention, it is not possible to carry out further treatments on the mixable ingredient);
- pouring the mixable ingredient into the cream base, for example through a hopper and/or an inlet lung and/or an in-line injection unit, in order to determine a maximum proportion of 30% of the ingredient that can be mixed with respect to the cream base in mass and/or in volume (conveniently, this transfer must be carried out at a temperature between 60°C and 65°C in order to guarantee a reduced viscosity of the resulting compound for the purposes of its movement or "transfer in line" and for enhancing the amalgamation between the two components of the food product);
- distributing the mixable ingredient in the cream base, for example by means of a screw pump and/or through an insulated mixing tank and/or through scraping blades and/or through stirring blades (technically, the geometry and the stirring speed of the blades just mentioned, and also that of the tank, must be such as to guarantee a perfect mixing of the compound, and in the case of continuous production it will be sufficient to add other mixing tanks, so as to never stop the processing cycle until the end, and it should also be noted that for certain types of particularly "pronounced" organoleptic and sensorial cheeses, it is possible to re-add pasteurized and homogenized cream directly when mixing the cream base + characterizing cheese: in this case the possible addition of cream must occur in quantities that are weighted appropriately for total quantities of fat substances and moisture of the final compound);
- pasteurizing the mixable ingredient distributed in the cream base, typically through heat exchangers of tubular or scraping type, at a maximum temperature of 85°C for a period of time between 15 sec and 30 sec;
- stabilizing a temperature, for example by means of a heat exchanger, of the mixable ingredient distributed in the cream base, said temperature being preferably equal to 60°C; and
- homogenizing again the mixable ingredient distributed in the cream base (conveniently at a pressure between 80 bar and 100 bar: higher pressures are not recommended because they would make the final cream more viscous and less spreadable).

After having obtained the aforementioned creamy food, it is also possible to implement a step of packaging the mixable ingredient distributed in the cream base: this packaging step is carried out at a temperature between 55°C and 60°C and is followed from a cooling step of the mixable ingredient distributed in the cream base.

The cooling described here is carried out for example by means of a heat sink and/or a cold room, and is followed by a storage step of the finished product (which therefore comprises the mixable ingredient distributed in the cream base) the latter storage step is typically made at a maximum temperature of 4°C.

By virtue of the fact that the products obtained by the process object of the invention have innovative characteristics, these latter too must be considered as forming part of the disclosure itself, but are not claimed as such:
in particular, the present disclosure also regards a creamy food (typically, a cream based on/with cheese comprising a cream base and a mixable ingredient homogeneously distributed in the cream base itself), and even more particularly a creamy food in which the mixable ingredient comprises a cheese processed according to the process itself.

As regards the different types of cheese combined and uniformly distributed in the cream base, as well as with regard to the different - albeit optional and non-limiting relative amounts - of these different types of cheese, cheeses of the following examples can be considered in as far as these belong to the group of hard cheese having a percentage of water by weight and/or by volume less than 40%:
- "grana padano" in a percentage by mass and/or by weight between 20% and 30%;
- "trentingrana" in a percentage by mass and/or by weight between 20% and 30%;
- "parmigiano reggiano" in a percentage by mass and/or by weight between 20% and 30%;
- "gorgonzola" in a percentage by mass and/or by weight between 22% and 28%;
- "taleggio" in a percentage by mass and/or by weight between 25% and 31%;
- "fontina" in a percentage by mass and/or by weight between 25% and 31%;
- "tuscan or sardinian or roman or sicilian pecorino" in a percentage by mass and/or by weight between 22% and 32%;
- "asiago" in a percentage by mass and/or by weight between 22% and 32%;
- "bitto" in a percentage by mass and/or by weight between 22% and 28%;
- "bra" in a percentage by mass and/or by weight between 24% and 30%;
- "pugliese canestrato" in a percentage by mass and/or by weight between 24% and 30%;
- "caciocavallo silano" in a percentage by mass and/or by weight between 25% and 30%;
- "castelmagno" in a percentage by mass and/or by weight between 22% and 28%;
- "sardinian flower" in a percentage by mass and/or by weight between 22% and 28%;
- "fossa cheese" in a percentage by mass and/or by weight between 22% and 28%;
- "formai de mut" in a percentage by mass and/or by weight between 22% and 28%;
- "montasio" in a percentage by mass and/or by weight between 24% and 30%;
- "murazzano" in a percentage by mass and/or by weight between 24% and 30%;
- "nostrano valtrompia" in a percentage by mass and/or by weight between 24% and 30%;
- "piacentinu ennese" in a percentage by mass and/or by weight between 22% and 28%;
- "provolone del monaco or valpadana" in a percentage by mass and/or by weight between 20% and 30%;
- "ragusano" in a percentage by mass and/or by weight between 22% and 28%;
- "robiola di roccaverano" in a percentage by mass and/or by weight between 25% and 31%;
- "stelvio" in a percentage by mass and/or by weight between 24% and 30%;
- "silter" in a percentage by mass and/or by weight between 24% and 30%;
- "spressa of the courts" in a percentage by mass and/or by weight between 22% and 28%;
- "piedmontese toma" in a percentage by mass and/or by weight between 25% and 31%;
- "valtellina casera" in a percentage by mass and/or by weight between 22% and 28%;
- "vastedda del belice" in a percentage by mass and/or by weight between 22% and 28%;
- "valle d'aosta fromazo" in a percentage by mass and/or by weight between 22% and 28%;
- "roquefort" in a percentage by mass and/or by weight between 20% and 30%;
- "cantal" in a percentage by mass and/or by weight between 22% and 28%;
- "compté" in a percentage by mass and/or by weight between 24% and 30%;
- "pont l'eveque" in a percentage by mass and/or by weight between 24% and 30%;
- "reblochon" in a percentage by mass and/or by weight between 24% and 30%;
- "abundance" in a percentage by mass and/or by weight between 22% and 28%;
- "saint-nectaire" in a percentage by mass and/or by weight between 24% and 30%;
- "ossau iraty" in a percentage by mass and/or by weight between 22% and 28%;
- "camembert" in a percentage by mass and/or by weight between 24% and 30%;
- "brie" in a percentage by mass and/or by weight between 24% and 30%;
- "edamer" in a percentage by mass and/or by weight between 25% and 31 %.

As further possibilities of choice regarding the mixable ingredient, it is also possible to indicate the possible presence of semi-mature cheeses produced starting from whole and/or semi-skimmed milk, raw or "thermised" or pasteurized, as well as aged cheeses produced in starting from whole milk and/or semi-skimmed, raw or "thermised" or pasteurized (in these cases, the percentage by mass and/or weight is between 25% and 30%).

The invention described above easily achieves the overcoming of the drawbacks of the prior art and also obtains other advantageous technical purposes, as specified hereinafter.

The most obvious of these purposes is the fact that the cheese combined with the "cream base" is kept in an organoleptic and nutritional state almost equivalent to that of the corresponding unworked/melted ingredient: this leads to a significant increase in the quality level (in terms of perception of taste and therefore of economic value of the product) and quantitative (in terms of greater nutritional power, better handling and storage as well as more efficient edibility and metabolic assimilation).

In this sense, it should be noted that the cheese/cheese-based creams obtained with this procedure differ considerably from the creams obtained by melting the ingredients also by virtue of the fact that while in known processes the temperatures imposed on the cheese (which must be melted) can reach values even higher than 130°C, with consequent loss of organoleptic and nutritional values, in this procedure these temperatures are never reached, thus avoiding the so-called "sterilization" of the product and the consequent flattening of the qualitative and quantitative characteristics of the product itself.

Among the other advantages of the process of the invention it should be noted that there are no operative steps based on the addition of additives or preservatives of any kind, nor on the use of caseinates, milk proteins, whey or powdered milk of any type: the present process (and consequently, the products obtained through it) advantageously uses only raw materials such as whole and/or skimmed milk, milk cream, lactic ferments and salt to make up the cream base, to which the cheese is mixed in the best possible operating conditions in a specific phase of the processing cycle (i.e. in appropriate doses and according to precise technological parameters necessary to ensure perfect mixing).

Remarkably, the absence of melting phases of one or more ingredients involves the nonuse of the melting salts normally used in the preparations of the known technique (sodium and calcium citrates, phosphates, polyphosphates etc.), to the benefit of the healthiness of the finished product and the reduction of raw material procurement costs.

It should also be noted that thanks to the present invention, the cheese-based creams thus obtained can be stored at a temperature of 4°C, at the same time obtaining a so-called durability (otherwise known as the "shelf-life" slang) approximately between 60 and 90 days from the date of production which is a quantitative result about three times greater than comparable products obtained with known-art procedures.

Last but not least, it is to be remarked that finished edible cheese creams obtainable through the process according to the invention have a substantially lower content of fat substances with respect to the one normally found in the cheese employable ad mixable ingredient/s in their un-worked state, and this substantial rebate of the overall fat substances does not hamper the finished product in terms of organoleptic qualities (along with an extremely low content of salt and sugars).

## Claims

1. A process for obtaining a creamy food, said creamy food being a cream based on/with cheese, said process comprising the following steps:
- providing a cream base;
- providing a mixable ingredient, said mixable ingredient being a hard cheese and being adapted to define a granular mass of the mixable ingredient, said hard cheese having a percentage of water by weight and/or by volume less than 40%; and
- joining to said cream base said mixable ingredient followed by pasteurizing said cream base and the mixable ingredient at a temperature not higher than 85°C and in a time period not exceeding 30 seconds,
**characterized by** the fact that said step of providing a cream base comprises the following sub-steps:
obtaining an acid clot through lactic fermentation by means of mesophilic bacteria active on a predetermined quantity of a suitable mixture of milk and cream;
separating said acid clot from an excess whey, thereby obtaining a cream base having a dry matter content of between 35% and 40% and/or a fat substances content of between 28% and 30% by mass and/or in volume;
said step of providing said mixable ingredient comprises a sub-step of purely mechanical processing of the mixable ingredient, said purely mechanical processing not comprising thermal melting processes of the mixable ingredient, said purely mechanical processing comprising a sub-step of trimming and/or a sub-step of grating the mixable ingredient;
said step of joining the mixable ingredient to the cream base comprises a sub-step of quantitatively determining a mixing proportion, by weight and/or volume, of the mixable ingredient with respect to the cream base between 25% and 30%.

2. A process according to claim 1, wherein said hard cheese has, in an unworked state, a maturation time, making it classifiable with the name of "parmigiano reggiano" and/or "grana padano" and/or "pecorino" and/or "provolone", a percentage of fat substances by weight or volume between 27% and 30%.

3. A process according to claim 1, wherein said sub-step of separating the acid clot is carried out by centrifugation.

4. A process according to claim 1, wherein the sub-step of obtaining the acid clot comprises the following sub-steps:
- using skimmed milk to prepare a base mixture by adding milk cream to skimmed milk;
- pasteurizing the base mixture at a temperature of 85°C for a time period between 15 sec and 30 sec;
- bringing the base mixture, following said pasteurizing sub-step, preferably by means of a heat exchanger, to a temperature between 23 °C and 25 °C;
- transferring the base mixture to a ripener;
- adding lyophilized mesophilic bacteria to the base mixture, said bacteria comprising streptococcus lactis and/or cremoris and/or diacetylactis, said sub-step of adding lyophilized mesophilic bacteria being adapted to determine a pH value of the base mixture equal to 5.7 and being adapted to define a predetermined quantity of pre-acidified skimmed milk;
- preliminary concentrating said predetermined quantity of pre-acidified skimmed milk;
- ultrafiltration of said predetermined quantity of pre-acidified skimmed milk, following a sub-step of heating the pre-acidified skimmed milk to a temperature of 50 °C, said ultrafiltration sub-step being adapted to obtain a retentate with a dry matter content comprised between 17% and 18% by mass and/or in volume;
- cooling the retentate to a temperature between 23°C and 25°C;
- loading the retentate, following said cooling sub-step, into a fermentation ripener;
- adding to the retentate, following to said loading sub-step, a predetermined quantity of lyophilized mesophilic bacteria comprising streptococcus lactis and/or cremoris and/or diacetylactis, said predetermined quantity of lyophilized mesophilic bacteria being equal to 1% by mass and/or by volume of the retentate;
- adding, following said sub-step of adding lyophilized mesophilic bacteria, a predetermined quantity of concentrated cream, said concentrated cream having previously been pasteurized at 85°C and/or homogenized at 170 bar and at 60 °C and/or introduced into a ripener at a temperature between 23 °C and 25 °C, said sub-step of adding concentrated cream being adapted to obtain a resulting quantity of fat substances between 28% and 30% by mass and/or in volume and a resulting dry matter content between 35% and 40% by mass and/or in volume;
- add sodium chloride in a quantity equal to 0.7% by mass and/or by volume;
- obtaining an acid clot of the base mixture;
- breaking said acid clot of the base mixture, preferably by means of a stirring blade which also acts as a scraping shovel and/or a clot rupture device.

5. A process according to claim 1, wherein it further comprises a step of heating the cream base to a temperature ranging from 60°C to 65 °C, said step of heating the cream base being prior to the step of mixing the cream base with the mixable ingredient and being preferably made by a heat exchanger.

6. The process according to any one of the preceding claims, wherein the step of joining the mixable ingredient to the cream base comprises the following sub-steps:
- a sub-step of purely mechanical processing, which is carried out by reducing the mixable ingredient in portions suitable for guaranteeing said homogeneous distribution of the mixable ingredient itself in the cream base, said reducing step of the mixable ingredient comprising a step of grating the mixable ingredient until a predetermined granulometry is obtained;
- pouring the mixable ingredient into the cream base, said pouring sub-step being preferably carried out by means of a hopper and/or an inlet lung and/or an in-line injection unit, said pouring sub-step being adapted to determine a maximum proportion of 30% of the mixable ingredient with respect to the cream base in mass and/or in volume and being produced at a temperature ranging from 60 °C to 65 °C;
- distributing the mixable ingredient in the cream base, said distributing sub-step being preferably carried out by means of a screw pump and/or through an insulated mixing tank and/or through scraping blades and/or through stirring blades;
- pasteurizing the mixable ingredient distributed in the cream base, preferably through heat exchangers of tubular scraping type, at a maximum temperature of 85 °C for a period of time between 15 sec and 30 sec;
- stabilizing a temperature, preferably by means of a heat exchanger, of the mixable ingredient distributed in the cream base, said temperature being equal to 60 °C; and
- homogenizing again the mixable ingredient distributed in the cream base, said homogenization sub-step being carried out at a pressure between 80 bar and 100 bar.

7. A process according to any one of the preceding claims, wherein a step of packaging the mixable ingredient distributed in the cream base is also present, said packaging step being carried out at a temperature ranging from 55°C to 60 °C and being followed by a sub-step of cooling the mixable ingredient distributed in the cream base, said cooling sub-step being preferably carried out by means of a thermal blast chiller and/or a cold room, and by a sub-step of storing a finished product comprising the mixable ingredient distributed in the cream base, said storing sub-step being performed at a temperature not higher than 4 °C .

## Patentansprüche

1. Verfahren zur Herstellung eines cremigen Lebensmittels, wobei das cremige Lebensmittel eine auf/mit Käse basierende Creme ist, umfassend die folgenden Schritte:
- Bereitstellen einer Cremebasis;
- Bereitstellen einer mischbaren Zutat, wobei die mischbare Zutat ein Hartkäse ist und dazu geeignet ist, eine körnige Masse der mischbaren Zutat zu bilden, wobei der Hartkäse einen Wasseranteil nach Gewicht und/oder Volumen von weniger als 40 % aufweist; und
- Zufügen der mischbaren Zutat zu der Cremebasis, gefolgt von Pasteurisieren der Cremebasis und der mischbaren Zutat bei einer Temperatur von höchstens 85 °C und in einem Zeitraum von höchstens 30 Sekunden,
**dadurch gekennzeichnet, dass** der Schritt des Bereitstellens einer Cremebasis die folgenden Unterschritte umfasst:
Gewinnung eines Säurebruchs durch Milchsäuregärung mittels mesophiler Bakterien, die auf eine vorbestimmte Menge einer geeigneten Mischung aus Milch und Sahne einwirken;
Abtrennen des Säurebruchs von überschüssiger Molke, wodurch eine Cremebasis mit einem Trockenmassegehalt zwischen 35 % und 40 % und/oder einem Fettgehalt zwischen 28 % und 30 % nach Masse und/oder Volumen erhalten wird;
wobei der Schritt des Bereitstellens der mischbaren Zutat einen Unterschritt der rein mechanischen Verarbeitung der mischbaren Zutat umfasst, wobei diese rein mechanische Verarbeitung keine thermischen Schmelzprozesse der mischbaren Zutat umfasst, und die rein mechanische Verarbeitung einen Unterschritt des Zuschneidens und/oder einen Unterschritt des Reibens der mischbaren Zutat umfasst;
wobei der Schritt des Zufügens der mischbaren Zutat zur Cremebasis einen Unterschritt der quantitativen Bestimmung eines Mischungsverhältnisses nach Gewicht und/oder Volumen der mischbaren Zutat in Bezug auf die Cremebasis zwischen 25 % und 30 % umfasst.

2. Verfahren nach Anspruch 1, wobei der Hartkäse im unbearbeiteten Zustand eine Reifezeit aufweist, die ihn unter den Namen "Parmigiano Reggiano" und/oder "Grana Padano" und/oder "Pecorino" und/oder "Provolone" klassifizierbar macht und einen Fettgehalt nach Gewicht oder Volumen zwischen 27 % und 30 % aufweist.

3. Verfahren nach Anspruch 1, wobei der Unterschritt des Abtrennens des Säurebruchs durch Zentrifugation durchgeführt wird.

4. Verfahren nach Anspruch 1, wobei der Unterschritt des Gewinnens des Säurebruchs die folgenden Unterschritte umfasst:
- Verwendung von Magermilch zur Herstellung einer Basismischung durch Zugabe von Sahne zu Magermilch;
- Pasteurisieren der Basismischung bei einer Temperatur von 85 °C für einen Zeitraum zwischen 15 Sekunden und 30 Sekunden;
- Herunterkühlen der Basismischung nach dem Pasteurisieren, vorzugsweise mittels eines Wärmetauschers, auf eine Temperatur zwischen 23°C und 25 °C;
- Überführen der Basismischung in einen Reifebehälter;
- Zugabe von lyophilisierten mesophilen Bakterien zur Basismischung, wobei diese Bakterien Streptococcus lactis und/oder cremoris und/oder diacetylactis umfassen, wobei der Unterschritt der Zugabe von lyophilisierten mesophilen Bakterien dazu geeignet ist, einen pH-Wert der Basismischung von 5,7 einzustellen und eine vorbestimmte Menge vorversäuerter Magermilch zu definieren;
- Vorläufiges Konzentrieren der vorbestimmten Menge vorversäuerter Magermilch;
- Ultrafiltration der vorbestimmten Menge vorversäuerter Magermilch nach einem Unterschritt des Erhitzens der vorversäuerten Magermilch auf 50 °C, wobei der Ultrafiltrations-Unterschritt dazu geeignet ist, ein Retentat mit einem Trockenmassegehalt zwischen 17 % und 18 % nach Masse und/oder Volumen zu erhalten;
- Abkühlen des Retentats auf eine Temperatur zwischen 23°C und 25 °C;
- Einbringen des Retentats nach dem Abkühlen in einen Fermentationsreifebehälter;
- Zugabe einer vorbestimmten Menge lyophilisierter mesophiler Bakterien, umfassend Streptococcus lactis und/oder cremoris und/oder diacetylactis, zum Retentat nach dem Einbringen, wobei die vorbestimmte Menge lyophilisierter mesophiler Bakterien 1 % nach Masse und/oder Volumen des Retentats beträgt;
- Zugabe einer vorbestimmten Menge konzentrierter Sahne nach dem Unterschritt der Zugabe von lyophilisierten mesophilen Bakterien, wobei die konzentrierte Sahne zuvor bei 85 °C pasteurisiert und/oder bei 170 bar und 60 °C homogenisiert und/oder in einen Reifebehälter bei 23 °C bis 25 °C eingebracht wurde, wobei der Unterschritt der Zugabe von konzentrierter Sahne dazu geeignet ist, eine resultierende Menge an Fettstoffen zwischen 28 % und 30 % nach Masse und/oder Volumen und einen resultierenden Trockenmassegehalt zwischen 35 % und 40 % nach Masse und/oder Volumen zu erhalten;
- Zugabe von Natriumchlorid in einer Menge von 0,7 % nach Masse und/oder Volumen;
- Gewinnung eines Säurebruchs der Basismischung;
- Zerbrechen des Säurebruchs der Basismischung, vorzugsweise mittels eines Rührblatts, das auch als Schaberschaufel und/oder als Bruchzerteiler dient.

5. Verfahren nach Anspruch 1, das ferner einen Schritt des Erhitzens der Cremebasis auf eine Temperatur von 60 °C bis 65 °C umfasst, wobei dieser Schritt des Erhitzens der Cremebasis vor dem Schritt des Mischens der Cremebasis mit der mischbaren Zutat erfolgt und vorzugsweise mittels eines Wärmetauschers durchgeführt wird.

6. Verfahren nach einem der vorhergehenden Ansprüche, wobei der Schritt des Zufügens der mischbaren Zutat zur Cremebasis die folgenden Unterschritte umfasst:
- einen Unterschritt der rein mechanischen Verarbeitung, der durch Zerkleinern der mischbaren Zutat in Portionen durchgeführt wird, die eine homogene Verteilung der mischbaren Zutat in der Cremebasis gewährleisten, wobei der Zerkleinerungsschritt das Reiben der mischbaren Zutat bis zu einer vorbestimmten Korngröße umfasst;
- Eingießen der mischbaren Zutat in die Cremebasis, wobei dieser Unterschritt vorzugsweise mittels eines Trichters und/oder einer Einlasskammer und/oder einer Inline-Injektionseinheit durchgeführt wird, wobei dieser Unterschritt dazu geeignet ist, einen maximalen Anteil von 30 % der mischbaren Zutat in Bezug auf die Cremebasis nach Masse und/oder Volumen zu bestimmen und bei einer Temperatur von 60 °C bis 65 °C durchgeführt wird;
- Verteilen der mischbaren Zutat in der Cremebasis, wobei dieser Unterschritt vorzugsweise mittels einer Schneckenpumpe und/oder durch einen isolierten Mischbehälter und/oder durch Schabeblätter und/oder Rührblätter durchgeführt wird;
- Pasteurisieren der in der Cremebasis verteilten mischbaren Zutat, vorzugsweise durch Wärmetauscher des Typs mit röhrenförmigen Schabern, bei einer Höchsttemperatur von 85 °C für einen Zeitraum zwischen 15 und 30 Sekunden;
- Stabilisieren einer Temperatur, vorzugsweise mittels eines Wärmetauschers, der in der Cremebasis verteilten mischbaren Zutat, wobei diese Temperatur 60 °C beträgt; und
- erneutes Homogenisieren der in der Cremebasis verteilten mischbaren Zutat, wobei dieser Homogenisierungs-Unterschritt bei einem Druck zwischen 80 bar und 100 bar durchgeführt wird.

7. Verfahren nach einem der vorhergehenden Ansprüche, wobei ein Schritt des Verpackens der in der Cremebasis verteilten mischbaren Zutat vorgesehen ist, wobei dieser Verpackungsschritt bei einer Temperatur von 55 °C bis 60 °C durchgeführt wird und gefolgt ist von einem Unterschritt des Abkühlens der in der Cremebasis verteilten mischbaren Zutat, wobei dieser Unterschritt vorzugsweise mittels eines Schockkühlers und/oder eines Kühlraums durchgeführt wird, und von einem Unterschritt des Lagerns eines Fertigprodukts, das die in der Cremebasis verteilte mischbare Zutat umfasst, wobei dieser Lagerungsschritt bei einer Temperatur von höchstens 4 °C durchgeführt wird.

## Revendications

1. Procédé pour obtenir un aliment crémeux, ledit aliment crémeux étant une crème à base de / avec du fromage, ledit procédé comprenant les étapes suivantes :
- la fourniture d'une base de crème ;
- la fourniture d'un ingrédient miscible, ledit ingrédient miscible étant un fromage à pâte dure et étant adapté pour définir une masse granulaire de l'ingrédient miscible, ledit fromage à pâte dure ayant un pourcentage d'eau en poids et/ou en volume inférieur à 40 % ; et
- l'ajout à ladite base de crème dudit ingrédient miscible, suivi de la pasteurisation de ladite base de crème et de l'ingrédient miscible à une température non supérieure à 85°C et pendant une période de temps ne dépassant pas 30 secondes,
**caractérisé en ce que** ladite étape de fourniture d'une base de crème comprend les sous-étapes suivantes :
l'obtention d'un caillé acide par fermentation lactique au moyen de bactéries mésophiles actives sur une quantité prédéterminée d'un mélange convenable de lait et de crème ;
la séparation dudit caillot d'acide d'avec le lactosérum en excès, ce qui donne ainsi une base de crème ayant une teneur en matière sèche comprise entre 35 % et 40 % et/ou une teneur en matières grasses comprise entre 28 % et 30 % en masse et/ou en volume ;
ladite étape de fourniture dudit ingrédient miscible comprend une sous-étape de traitement purement mécanique de l'ingrédient miscible, ledit traitement purement mécanique ne comprenant pas de traitements de fonte thermique de l'ingrédient miscible, ledit traitement purement mécanique comprenant une sous-étape de découpe et/ou une sous-étape de râpage de l'ingrédient miscible ;
ladite étape d'ajout de l'ingrédient miscible à la base de crème comprend une sous-étape de détermination quantitative d'une proportion de mélange, en poids et/ou en volume, de l'ingrédient miscible par rapport à la base de crème, comprise entre 25 % et 30 %.

2. Procédé selon la revendication 1, dans lequel ledit fromage à pâte dure a, dans un état non travaillé, un temps de maturation le rendant classifiable sous le nom "parmigiano reggiano" et/ou "grana padano" et/ou "pecorino" et/ou "provolone", et un pourcentage de matières grasses en poids ou en volume compris entre 27 % et 30 %.

3. Procédé selon la revendication 1, dans lequel ladite sous-étape de séparation du caillé acide est effectuée par centrifugation.

4. Procédé selon la revendication 1, dans lequel la sous-étape d'obtention du caillé acide comprend les sous-étapes suivantes :
- l'utilisation de lait écrémé pour préparer un mélange de base par addition de crème de lait à du lait écrémé ;
- la pasteurisation du mélange de base à une température de 85°C pendant une période de temps comprise entre 15 s et 30 s ;
- le retour du mélange de base, après ladite sous-étape de pasteurisation, de préférence au moyen d'un échangeur de chaleur, à une température comprise entre 23°C et 25°C ;
- le transfert du mélange de base dans un affineur ;
- l'addition de bactéries mésophiles lyophilisées au mélange de base, lesdites bactéries comprenant Streptococcus lactis et/ou cremoris et/ou diacetylactis, ladite sous-étape d'addition de bactéries mésophiles lyophilisées étant adaptée pour déterminer une valeur de pH du mélange de base égal à 5,7 et étant adaptée pour définir une quantité prédéterminée de lait écrémé pré-acidifié ;
- la concentration préliminaire de ladite quantité prédéterminée de lait écrémé pré-acidifié ;
- l'ultrafiltration de ladite quantité prédéterminée de lait écrémé pré-acidifié, après une sous-étape de chauffage du lait écrémé pré-acidifié à une température de 50°C, ladite sous-étape d'ultrafiltration étant adaptée pour que soit obtenu un rétentat ayant une teneur en matière sèche comprise entre 17 % et 18 % en masse et/ou en volume ;
- le refroidissement du rétentat à une température comprise entre 23°C et 25°C ;
- le chargement du rétentat, après ladite sous-étape de refroidissement, dans un affineur à fermentation ;
- l'addition au rétentat, après ladite sous-étape de chargement, d'une quantité prédéterminée de bactéries mésophiles lyophilisées comprenant Streptococcus lactis et/ou cremoris et/ou diacetylactis, ladite quantité prédéterminée de bactéries mésophiles lyophilisées étant égale à 1 % en masse et/ou en volume du rétentat ;
- l'addition, après ladite sous-étape d'addition de bactéries mésophiles lyophilisées, d'une quantité prédéterminée de crème concentrée, ladite crème concentrée ayant préalablement été pasteurisée à 85°C et/ou homogénéisée sous 170 bar et à 60°C et/ou introduite dans un affineur à une température comprise entre 23°C et 25°C, ladite sous-étape d'addition de crème concentrée étant adaptée pour que soit obtenue une quantité résultante de matières grasses comprise entre 28 % et 30 % en masse et/ou en volume et une teneur en matière sèche résultante comprise entre 35 % et 40 % en masse et/ou en volume ;
- l'addition de chlorure de sodium en une quantité égale à 0,7 % en masse et/ou en volume ;
- l'obtention d'un caillé acide du mélange de base ;
- la dissociation dudit caillé acide d'avec le mélange de base, de préférence au moyen d'une lame d'agitation qui agit aussi comme une spatule de raclage et/ou un dispositif de rupture de caillé.

5. Procédé selon la revendication 1, qui comprend en outre une étape de chauffage de la base de crème à une température située dans la plage allant de 60°C à 65°C, ladite étape de chauffage de la base de crème étant avant l'étape de mélange de la base de crème avec l'ingrédient miscible et étant de préférence réalisée au moyen d'un échangeur de chaleur.

6. Procédé selon l'une quelconque des revendications précédentes, dans lequel l'étape d'ajout de l'ingrédient miscible à la base de crème comprend les sous-étapes suivantes :
- une sous-étape de traitement purement mécanique, qui est effectuée par réduction de l'ingrédient miscible en portions convenant pour garantir ladite distribution homogène de l'ingrédient miscible lui-même dans la base de crème, ladite étape de réduction de l'ingrédient miscible comprenant une étape de râpage de l'ingrédient miscible jusqu'à ce qu'une granulométrie prédéterminée soit obtenue ;
- le versement de l'ingrédient miscible dans la base de crème, ladite sous-étape de versement étant de préférence effectuée au moyen d'une trémie et/ou d'un réservoir de compensation et/ou d'une unité d'injection en ligne, ladite sous-étape de versement étant adaptée pour déterminer une proportion maximale de 30 % de l'ingrédient miscible par rapport à la base de crème en masse et/ou en volume, et avec une production à une température située dans la plage allant de 60°C à 65°C ;
- la distribution de l'ingrédient miscible dans la base de crème, ladite sous-étape de distribution étant de préférence effectuée au moyen d'une pompe à vis et/ou par l'intermédiaire d'un réservoir de mélange isolé et/ou par l'intermédiaire de lames de raclage et/ou par l'intermédiaire de lames d'agitation ;
- la pasteurisation de l'ingrédient miscible distribué dans la base de crème, de préférence par l'intermédiaire d'échangeurs de chaleur du type à raclage tubulaire, à une température maximale de 85°C pendant une période de temps comprise entre 15 s et 30 s;
- la stabilisation de la température, de préférence au moyen d'un échangeur de chaleur, de l'ingrédient miscible distribué dans la base de crème, ladite température étant égale à 60°C ; et
- de nouveau l'homogénéisation de l'ingrédient miscible distribué dans la base de crème, ladite sous-étape d'homogénéisation étant effectuée sous une pression comprise entre 80 bar et 100 bar.

7. Procédé selon l'une quelconque des revendications précédentes, dans lequel une étape de conditionnement de l'ingrédient miscible distribué dans la base de crème est aussi présente, ladite étape de conditionnement étant effectuée à une température située dans la plage allant de 55°C à 60°C et étant suivie d'une sous-étape de refroidissement de l'ingrédient miscible distribué dans la base de crème, ladite sous-étape de refroidissement étant de préférence effectuée au moyen d'un refroidisseur rapide et/ou d'une chambre froide, et d'une sous-étape de stockage du produit fini comprenant l'ingrédient miscible distribué dans la base de crème, ladite sous-étape de stockage étant effectuée à une température non supérieure à 4°C.
